# EUROPEAN PATENT SPECIFICATION

(11) **EP 2 820 316 B1**
(45) Date of publication and mention of the grant of the patent: **25.05.2016**
(21) Application number: 12705891.5
(22) Date of filing: 28.02.2012
(51) Int. Cl.: F16C 13/02, F16C 23/10, F16C 19/55, B41F 13/28

(54) **THREE-RING BEARING**
DREIRINGLAGER
PALIER À TROIS ANNEAUX

(43) Date of publication of application: 07.01.2015
(73) Proprietor: Hewlett-Packard Indigo B.V., 1187 XR Amstelveen (NL); Schaeffler Technologies AG & Co. KG, 91074 Herzogenaurach (DE)
(72) Inventor: MOR-YOSEF, Avichay, Ness Ziona 76101 (IL); DITTENHÖFER, Thomas, 97519 Riedbach (DE)
(74) Representative: Jennings, Vincent Louis
(86) International application number: PCT/EP2012/053367
(87) International publication number: WO 2013/127440

(56) References cited:
- EP-A1- 0 591 792
- DE-A1- 2 542 070
- FR-A1- 2 645 928
- GB-A- 2 199 622
- JP-A- 2 009 636
- JP-A- 2001 140 872
- US-A1- 2003 066 444
- US-A1- 2010 008 612

## Description

### BACKGROUND

Offset or digital printing systems, as well as other systems and devices, employ cylindrical rollers. For example, in offset printing, ink for formation of an image may be originally deposited on a plate cylinder. As the plate cylinder rolls about its axis, ink may be transferred to an adjacent blanket cylinder (since the surface of the blanket cylinder may be covered by a replaceable blanket - in offset printing may this cylinder may be referred to as an offset cylinder) which is also being rotated about its axis in coordination with the plate cylinder. Finally, the ink may be transferred from the blanket cylinder to a print medium (e.g. paper) that is pressed as it is advanced between the rotating blanket cylinder and a coordinated rotating impression cylinder.

Ends of a roller of a device or apparatus may be mounted on bearings that enable the roller to roll about its axis with reduced friction. In some devices, the axis of the roller may be moveable. For example, an end of the roller may be mounted eccentrically to a rotatable disk. Rotating the disk may thus change the position of an axis of the roller.

For example, a position of the axis may be movable in order to adjust a gap between the roller and another element (e.g. between a plate cylinder and a blanket cylinder). In other cases, a position of the axis may be adjusted in order to adjust a pressing force that is exerted by the roller on another element (e.g. nip pressure between a blanket cylinder and an impression cylinder).

DE 2542070A1 relates to a roller bearing consisting of an outer ring, inner ring, and eccentric intermediate ring.

### BRIEF DESCRIPTION OF THE DRAWINGS

The subject matter regarded as the invention is particularly pointed out and distinctly claimed in claim 106 the concluding portion of the specification. The invention, however, both as to organization and method of operation, together with objects, features and advantages thereof, may best be understood by reference to the following detailed description when read with the accompanied drawings in which:
Fig. 1 illustrates an example of a three-ring bearing for eccentric mounting of a rolling element;
Fig. 2 shows a face of the three-ring bearing illustrated in Fig. 1;
Fig. 3 shows an section of the three-ring bearing illustrated in Fig. 1;
Fig. 4 shows a radial cross section through a diameter of the three-ring bearing illustrated in Fig. 1;
Fig. 5 shows a section through an example of a cylinder that is mounted in a three-ring bearing such as the three-ring bearing shown in Fig. 1; and
Fig. 6 schematically illustrates utilizing a tilt tolerance of an example of a three-ring bearing for eccentric mounting of a rolling element.

### DETAILED DESCRIPTION

An example of a three-ring bearing may include a ring, herein referred to as a fixed ring, that is configured to be fixed in space. For example, the fixed ring may be connected or held by a fixture. Another ring of the bearing, herein referred to as the rotating ring, is configured to hold or connect to an end (or other portion) of a rotatable element, such as a roller or cylinder. The axis of the rotating ring is laterally displaced with respect to the fixed ring. Between the rotating ring and the fixed ring is a ring that includes an eccentrically positioned bore, and herein referred to as an eccentric ring. One of the rotating ring and the fixed ring is substantially coaxial with the eccentric ring, while the other is located within, and substantially coaxial with, the eccentrically positioned bore. Thus, rotation of the eccentric ring relative to the fixed ring may laterally translate the rotating ring. Rotation of the rotating ring relative to the eccentric ring enables the rotatable element to roll or rotate.

For example, the fixed ring may be an outer ring, with the eccentric ring being coaxial with the fixed ring. The rotating ring is mounted within, and coaxial with, the eccentrically placed bore in the eccentric ring. Relative rotation of the eccentric ring relative to the fixed ring may thus change a position of the axis of the rotating ring relative to the common axis of the fixed ring and the eccentric ring.

In another example, the fixed ring may be mounted within the eccentrically placed bore in the eccentric ring. The fixed ring may be mounted around the perimeter of the eccentric ring. For example, a rotating element may be mounted or connected to (e.g. a hollow section may fit over, or may be screwed or bolted to) the outer rotating ring. Rotation of the eccentric ring about the fixed ring may move the outer rotating ring relative to the axis of the inner fixed ring.

A bearing that separates the fixed ring from the eccentric ring includes an angular contact ball bearing (ACBB). For example, the fixed ring may include two or more component rings of substantially equal diameter. The fixed ring may thus be formed by placing the component rings coaxially with and adjacent to one another. Each pair of adjacent component rings is separated by an adjustable gap. Each component ring includes at least one angled surface. The facing surface of the eccentric ring includes a groove into which the balls of the ACBB may fit. Reducing the size of the gap between two adjacent component rings of the fixed ring (e.g. to zero such that the component rings are in contact) may reduce the radial and axial clearance of the ACBB to zero or less. (A clearance of less than zero designates a press fit, in which the balls are squeezed between elements of the ACBB.) Such reduced radial clearance may increase or maximize precision of rotation of the eccentric ring relative to the fixed ring. In addition, since the area of contact of each ball of the ACBB with an adjacent surface is essentially a single point, rolling friction may be reduced or minimized (e.g. relative to a cylindrical or needle roller bearing in which an area of contact between each roller and an adjacent surface is essentially linear).

The orientation of the angled surface may be selected so as to either facilitate or resist angular deviation (skew) of an axis of the rotating ring (and a shaft or rotating element that is connected to the rotating ring) relative to the axis of the fixed ring. For example, a face-to-face arrangement of the angled surfaces may enable continued rotation (e.g. may not appreciably increase friction of the ACBB) despite skewing of the axis. On the other hand, a back-to-back arrangement of the angled surface not part of the invention may provide for a torque that resists relative skewing of the axes, or that contributes to increased resistance of the ACBB when the axes are skewed.

A bearing between the rotating ring and the eccentric ring may include a cylindrical roller bearing (CRB), a ball bearing (e.g. a deep groove bearing, a self aligning bearing, or an ACBB), needle roller bearing, spherical roller bearing, or any other suitable bearing. Radial clearance in the bearing between the rotating ring and the eccentric ring may also be reduced to zero or less so as to maximize precision of that bearing.

Minimizing friction between the fixed ring and the eccentric ring, and increasing the precision of their relative rotation, may facilitate adjustment of an exerted force (e.g. a nip pressure) between a rotating element mounted to the rotating ring (e.g. an impression cylinder) and an element that is mounted adjacently to the rotating element (e.g. a blanket cylinder). For example, an electric current that is supplied to an electric motor for rotating the eccentric ring relative to the fixed ring may be monitored. A torque that is provided by the electric motor may be derived from the electric current. Minimized friction and maximized precision of the relative rotation between the eccentric ring and the fixed ring may enable calculation of the exerted force. Thus, the force may be continually monitored and adjusted during operation (e.g. of a digital or offset printing device).

Similarly, a distance between a rotating element and another element (e.g. between a plate cylinder and a blanket cylinder of a digital or offset printing device) may be continually adjustable. For example, a distance between adjacent elements may be monitored by a sensor (e.g. optical, mechanical, acoustic, or electromagnetic) or derived from a measured angle and known geometry of the three-ring bearing and of the adjacent elements.

Use of a precision bearing, such as an ACBB or CRB with radial clearance of zero or less, may also facilitate reduction of vibrations to a minimum and increase a life span of the bearing and associated subsystems. When used in a digital or offset printing device, a precision bearing may reduce vibrations and enable continuous monitoring of a nip pressure between a blanket cylinder and an adjacent impression cylinder. Thus, print quality may be improved over use of another type of bearing.

An end of a central shaft of a cylinder or other rotatable element, such as a cylinder of a digital or offset printing device, may be inserted through a center opening of a rotating ring of a three-ring bearing. The rotating ring may be contained within an eccentrically placed bore that is surrounded by the eccentric ring of the three-ring bearing. A position of the central shaft of the cylinder may be adjustable by rotation of the eccentric ring relative to the outermost fixed ring. An electric motor for rotating the eccentric ring relative to the fixed ring may be attached without the use of gears or other transmission elements. For example, the rotor of a frameless motor may be attached directly to the eccentric ring, and a stator of the frameless motor may be attached directly to the fixed ring. An electric current that is be provided to the frameless motor in order to rotate the frameless motor's rotor may be monitored. In addition, an encoder may indicate a current orientation of the eccentric ring relative to the fixed ring. The encoder and electrical current may then be analyzed to yield a force that is exerted by the cylinder on an adjacent body, such as an adjacent cylinder of a digital or offset printing device. An encoder reading may be analyzed to yield a position of the cylinder, e.g. to calculate a gap between the cylinder and an adjacent cylinder.

For example, a three-ring bearing suitable for use in a digital or offset printing device may include an outer fixed ring, an intermediate eccentric ring, and an inner rotating ring.

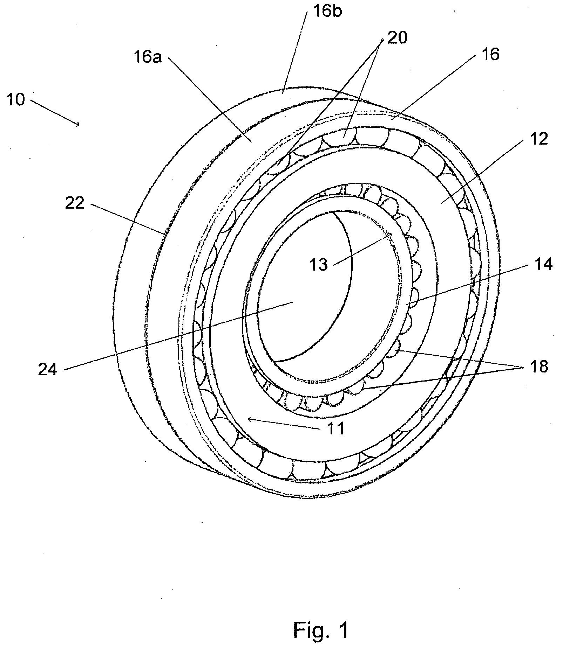

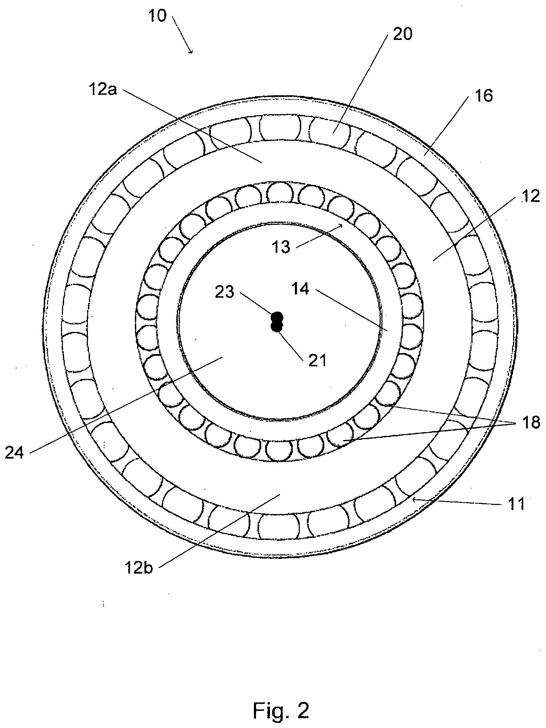

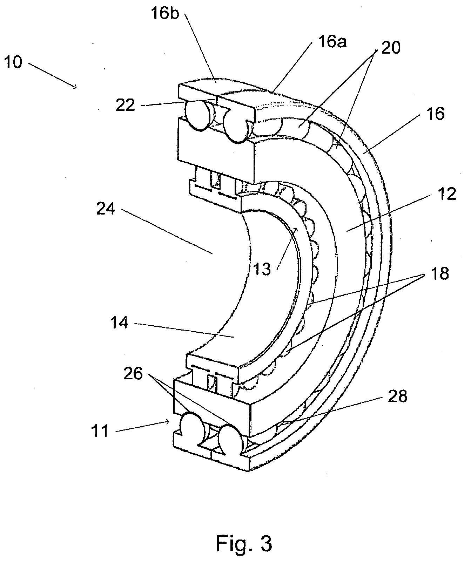

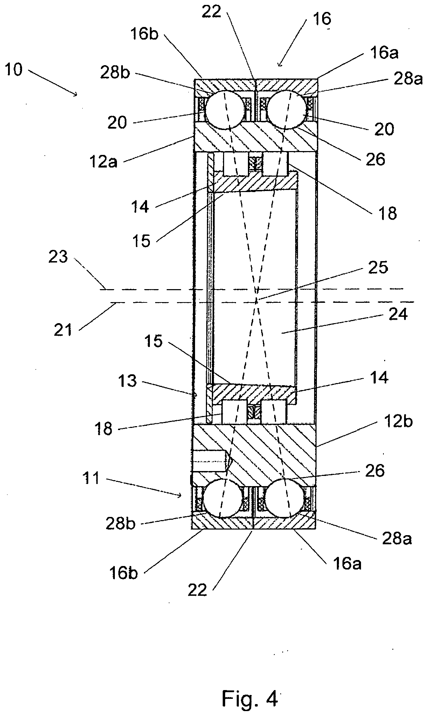

Fig. 1 illustrates an example of a three-ring bearing for eccentric mounting of a roller. Fig. 2 shows a face of the three-ring bearing illustrated in Fig. 1. Fig. 3 shows a section of the three-ring bearing illustrated in Fig. 1. Fig. 4 shows a cross section through a diameter of the three-ring bearing illustrated in Fig. 1.

Three-ring bearing 10 includes an eccentric ring 12 mounted within fixed ring 16. Eccentric ring 12 is substantially coaxial with fixed ring 16, having common axis 21. Fixed ring 16 includes fixed ring section 16a and fixed ring section 16b, separated by gap 22.

ACBB 11 separates eccentric ring 12 from fixed ring 16. As shown, bearing balls 20 of ACBB 11 are arranged in two coaxial circles of equal diameter. A framework in which fixed ring 16 is mounted, or another mechanical arrangement, may press fixed ring section 16a and fixed ring section 16b together to reduce the width of gap 22 (e.g. to zero) so as to form fixed ring 16.

Ring section 16a and ring section 16b each includes an angled surface 28a or 28b, respectively. As shown, angled surfaces 28a and 28b face one another (face-to-face arrangement). Pressing fixed ring section 16a and fixed ring section 16b together so as to close gap 22 may cause angled surfaces 28a and 28b to cooperate with bearing balls 20 and ball grooves 26 to form ACBB 11. Cooperation of angled surfaces 28a and 28b with bearing balls 20 and ball grooves 26 may minimize radial clearance (spaces between bearing balls 20 and angled surfaces 28a and 28b, and between balls to and ball grooves 26) within ACBB 11. Reduced radial clearance within ACBB 11 may result in precise relative positioning of fixed ring 16 and eccentric ring 12.

In other examples, more than two circles of bearing balls may be used. Angled surfaces for confining bearing balls may face away from one another (back-to-back arrangement).

Rotating ring 14 is mounted eccentrically within eccentric ring 12. Thus, rotating ring axis 23 of rotating ring 14 is laterally displaced from common axis 21 of eccentric ring 12 and fixed ring 16. Thus, a radial width of eccentric ring 12 (as measured radially from inner side of ACBB 11 to outer side of CRB 13) varies axially. Thus, annular section 12a of eccentric ring 12 is narrower than annular section 12b of eccentric ring 12. Rotating ring 14 surrounds central bore 24 (approximately coaxial with rotating ring 14). For example, central bore 24 may be configured for insertion of a shaft of a rotating element, such as a cylinder of a digital or offset printing device. Rotation of eccentric ring 12 may thus change a radial distance between the inserted shaft and fixed ring 16 (or an adjacent cylinder or other component).

Rotating ring 14 is separated from eccentric ring 12 by CRB 13. Cylinder bearing 13 includes bearing cylinders 18. Bearing cylinders 18 are confined between an outer side of rotating ring 14 and an inner side of eccentric ring 12. As shown, bearing cylinders 18 of CRB 13 are arranged in two coaxial circles of equal diameter. In other examples, more or less than two rows of cylinders, or needle bearings may be used.

Inner surface 15 of rotating ring 14, facing central bore 24, may be tapered. Such a tapering of inner surface 15 may enable a tight fit around a correspondingly tapered shaft that is inserted into central bore 24. For example, a narrowed end of an inserted tapered shaft may be threaded (e.g. on the outer surface of the shaft, or within an internal axial bore of the shaft). When the threaded end is inserted into central bore 24, tightening a correspondingly threaded nut or screw may hold the shaft in place relative to rotating ring 14.

The angle of angled surfaces 28a and 28b may be configured so as to facilitate misalignment (skewing) between the axis of rotating ring 14 (and an inserted shaft) and the axis of fixed ring 16. In a face-to-face configuration as shown, angled surfaces 28a and 28b are angled toward one another. A force may be exerted by angled surfaces 28a and 28b on bearing balls 20 that is linearly transmitted to a shaft that is inserted into central bore 24. With a face-to-face configuration, the points where the forces are applied to a shaft or other rotating element that is inserted into central bore 24 may be close to one another. When the points where the forces are applied to the shaft are close to one another, a torque that resists skewing of the shaft (relative to the axis of the fixed ring) is minimized. Furthermore, the angles of angled surfaces 28a and 28b may be selected such the forces exerted by both of angled surfaces 28a and 28b are transmitted to an approximately single axial position along the shaft, such as point 25 (due to the eccentricity of eccentric ring 12, the angles do not meet at the center of central bore 24 and the position of point 25 relative to the center of central bore 24 may vary for different radial sections through three-ring bearing 10). For example, point 25 may substantially coincide with an axis of ACBB 11 (e.g. common axis 21, which may be displaced from rotating ring axis 23). Thus, if the axis of the shaft is misaligned or skewed relative to the axis of fixed ring 16, little or no extra force (torque) is exerted on bearing balls 20. Thus, friction in ACBB 11 may not be appreciably increased when the axis is skewed.

By enabling skewing of an axis of rotating ring 14 relative to the axis of fixed ring 16, a pair of three-ring bearings 10 may manipulated to adjust an angle of a shaft whose ends are inserted into the central bores 24 of each of the two three-ring bearings 10. For example, an eccentric ring 12 of one of a pair of three-ring bearings 10 that support opposite ends of a shaft may be rotated independently of the eccentric ring 12 of the other. For example, an orientation of a supported shaft may be adjusted to be parallel to an adjacent component (e.g. another cylinder).

In some examples of a three-ring bearing, a back-to-back configuration of angled surfaces (with the angled surfaces facing away from one another) not part of the invention may be utilized. With such a back-to-back configuration, the distance between where the forces are applied to the shaft are maximized (e.g. the distance is always greater than the distance between the angled surfaces). The resulting increased axial torque may resist skewing or rotation of a shaft that is inserted into, or otherwise connected to, a rotating ring of the three-ring bearing.

An example of three-ring bearing may be utilized to support a rotating element, such as a cylinder of a digital or offset printing device.

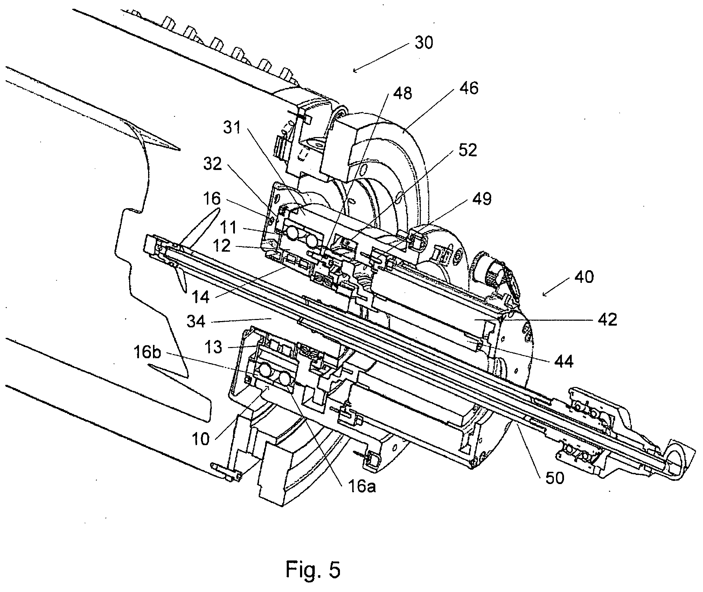

Fig. 5 shows a section through an example of a cylinder that is mounted in a three-ring bearing such as the three-ring bearing shown in Fig. 1. A cylinder shaft 34 of cylinder 30 is inserted into rotating ring 14 of bearing 10. Cylinder shaft 34 is tapered in a manner corresponding to the taper of inner surface 15 (shown in Fig. 4) of rotating ring 14. For example, a taper angle of cylinder shaft 34 may be approximately equal to the taper angle of inner surface 15. An element (such as cooling assembly 50 or a similar element) may insert through central bore 24 (Fig. 1) of rotating ring 14 and mate with cylinder shaft 34.

Fixed ring sections 16a and 16b are held within bearing housing fixture 31. When fixed ring sections 16a and 16b are held by bearing housing fixture 31, plate 32 applies a lateral force to fixed ring sections 16a and 16b. The applied lateral force may press fixed ring sections 16a and 16b together. Pressing fixed ring sections 16a and 16b together may provide a force that reduces the radial clearance within ACBB 11 to zero or less. (A radial clearance of less than zero indicates a press fit that squeezes bearing balls 20 of ACBB 11.) Such a reduction in radial clearance may maximize precision of rotation of eccentric ring 12 relative to fixed ring 16. Thus, play between eccentric ring 12 and fixed ring 16 may be minimized.

The cylinder 30 may be rotated by cylinder rotation gear 46 (e.g. powered by an external rotation motor and pinion).

A lateral position of cylinder 30 may be adjusted by rotation of eccentric ring 12 relative to fixed ring 16. Eccentric ring rotation motor 40 may rotate eccentric ring 12.

In the frameless motor arrangement shown, stator 42 of eccentric ring rotation motor 40 may be coupled directly bearing housing fixture 31 via stator screws 49. Thus, stator 42 is connected to fixed ring 16. Rotor 44 of eccentric ring rotation motor 40 is connected to eccentric ring 12 by rotor screws 48. Thus, rotation or rotor 44 directly results in rotation of eccentric ring 12. Thus, eccentric ring rotation motor 40 is connected to fixed ring 16 and eccentric ring 12 directly, without any intervening gears or other transmission elements.

A state of rotation of rotor 44 relative to stator 42, or of eccentric ring 12 relative to fixed ring 16, may be measured by encoder 52 (e.g. a magnetic encoder). A reading from encoder 52 may be interpreted to yield a relative angle between rotor 44 and stator 42, or between eccentric ring 12 and fixed ring 16. The absence of transmission elements may minimize or eliminate backlash, delay, or other mismatch or inaccuracy between rotation of rotor 44 and of eccentric ring 12. Thus, a relative angle that is measured between rotor 44 and stator 42 may be accurately and directly interpreted as a concurrent relative angle between eccentric ring 12 and fixed ring 16, or vice versa.

Similarly, an electrical current that is provided to eccentric ring rotation motor 40 may be monitored by suitable current measurement circuitry. A measured electrical current may be interpreted to yield a torque that is exerted by eccentric ring rotation motor 40. The absence of transmission elements may enable reduced or minimized friction forces that could cause the torque that is applied by eccentric ring 12 (to cylinder shaft 34) to be weaker than the torque that is applied by rotor 44. Thus, a measured torque of eccentric ring rotation motor 40 may be accurately and directly interpreted as a concurrent torque that is applied by eccentric ring 12.

A measured rotation angle of eccentric ring 12 and a measured torque applied by eccentric ring 12, may be interpreted to yield a nip pressure (or other force) that is applied by cylinder 30 on an adjacent cylinder or other element (the calculation also requiring knowledge of physical dimensions of cylinder 30, as well as the dimensions and position of the adjacent cylinder or other element). A torque T that is applied by cylinder 30 may be related to nip pressure F and a displacement vector r (e.g. between a central axis of eccentric ring 12 and a point of contact between cylinder 30 and the adjacent cylinder or element) by the vector equation T = r x F. For example, displacement vector r may be calculated from the measured rotation angle of eccentric ring 12, and from knowledge of the physical dimensions of cylinder 30 and the geometrical arrangement of cylinder 30 and the adjacent cylinder or element.

Thus, by continuously monitoring the rotation angle of eccentric ring 12 and the torque applied by eccentric ring rotation motor 40, a calculated value of the magnitude of a nip pressure or other force may be continuously monitored. If the nip pressure or other force deviates from a predetermined acceptable range (or is approaching a limit of the range), the rotation angle of eccentric ring 12 may be adjusted so as to bring the force to within the acceptable range. For example, as cylinder 30 or adjacent cylinder is rotated about its axis, a nip pressure at a line of contact between cylinder 30 and the adjacent cylinder may vary. Such variation may be due to, for example, variations in thickness of a printing blanket that surrounds an blanket cylinder (blanket runout), variation in shape of one of the cylinders (cylinder or drum runout), or variation in thickness of a print medium such as paper being pressed between the two adjacent cylinders (paper runout). Thus, a digital or offset printing device that includes a cylinder that is mounted using examples of three-ring bearings as described herein may provide a consistent print quality despite such variations.

ACBB 11 may be configured such that an orientation of an axis of eccentric ring 12 (and of a parallel common axis of rotating ring 14, cylinder 30, cylinder rotation gear 46, and cylinder shaft 34) may be tilted (skewed) by a limited amount relative to an orientation of an axis of fixed ring 16. For example, the slopes of angled surfaces 28a and 28b (Fig. 4) may be configured so as to tolerate (e.g. minimally resist) such tilting. Forces exerted by angled surfaces 28a and 28b may exert minimal tilting torque on cylinder shaft 34 due to minimal separation between the points where such force is exerted on cylinder shaft 34, e.g. as represented by point 25 (Fig. 4).

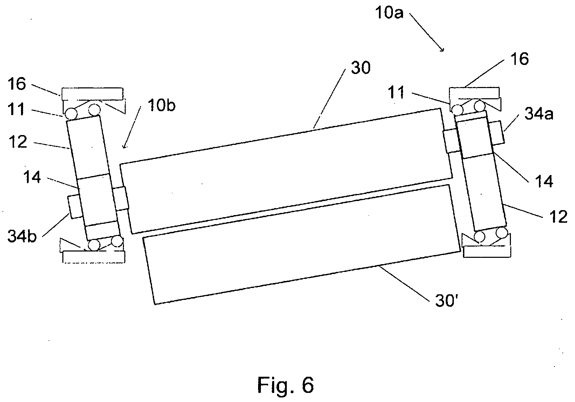

Fig. 6 schematically illustrates utilizing a tilt tolerance of an example of a three-ring bearing for eccentric mounting of a rolling element.

Cylinder shaft 34a of cylinder 30 is inserted into rotating ring 14 of three-ring bearing 10a. Similarly, cylinder shaft 34b of cylinder 30 is inserted into rotating ring 14 of three-ring bearing 10b. Cylinder 30 is tilted to match the orientation of adjacent cylinder 30'. In order to achieve the desired orientation of cylinder 30, eccentric ring 12 of three-ring bearing 10a is rotated such that rotating ring 14 and cylinder shaft 14a are moved away from adjacent cylinder 30'. Concurrently, eccentric ring 12 of three-ring bearing 10b is rotated such that rotating ring 14 and cylinder shaft 14b are moved toward adjacent cylinder 30'. As a result, eccentric ring 12 of three-ring bearing 10a is tilted with respect to fixed ring 16 of three-ring bearing 10a. Similarly, eccentric ring 12 of three-ring bearing 10b is tilted with respect to fixed ring 16 of three-ring bearing 10b. Such a tilt may be enabled by a configured tolerance to tilting of ACBB 11. (For the sake of illustration, the amount of tilt of cylinder 30, as well as the amount of eccentricity of eccentric ring 12 as indicated by the shift in position of rotating ring 14, may be exaggerated in comparison with a typical example of use of a three-ring bearing as described herein.)

In the absence of such a configured tolerance to tilting, eccentric rings of both three-ring bearings (e.g. of three-ring bearing 10a and of three-ring bearing 10b) would have to be moved in tandem (e.g. with rotating rings 14 of both three-ring bearing 10a and of three-ring bearing 10b being concurrently rotated either toward or away from adjacent cylinder 30') so as to ensure that the axis of a held cylinder or other element remains parallel to the axis of the fixed ring No tilting an axis of the cylinder would be possible.

## Claims

1. A bearing comprising:
a fixed ring (16);
a rotating ring (14) to support an end of a rotatable element, an axis of the rotating ring being laterally displaced from an axis of the fixed ring;
an eccentric ring (12) that separates the rotating ring from the fixed ring, the eccentric ring (12) being rotatable relative to the fixed ring (16) and being separated from the fixed ring (16) an angular contact ball bearing (ACBB) (11) the eccentric ring (12) being separated from the rotating ring (14) by a second bearing (13) the eccentric ring (12) being substantially coaxial with either the fixed ring (16) or the rotating ring (14);
wherein the ACBB (11) comprises a face-to-face arrangement of tilted surfaces (28a, 28b) to confine balls (20) of the ACBB; and **characterised in that**
a tolerance of the ACBB to tilting is configured such that an orientation of the axis of the eccentric ring (12) tiltable with respect to the axis of the fixed ring (16).

2. The bearing of claim 1, wherein the fixed ring (16) surrounds, and is substantially coaxial with, the eccentric ring (12).

3. The bearing of claim 1, wherein balls of the ACBB (11) are arranged in two substantially coaxial circles of substantially equal diameter.

4. The bearing of claim 1, wherein a slope of each tilted surface (28a, 28b) is such that a force that is applied by the surface on each ball of the ACBB (11) is directed substantially toward an axis of the ACBB.

5. The bearing of claim 1, wherein a radial clearance of the ACBB (11) is zero or less.

6. The bearing of claim 1, wherein the second bearing comprises a cylindrical roller bearing (13).

7. The bearing of claim 6, wherein cylinders (18) of the cylindrical roller bearing (13) are arranged in two substantially coaxial circles of substantially equal diameter.

8. The bearing of claim 6, wherein a radial clearance of the cylindrical roller bearing (13) is zero or less.

9. The bearing of claim 1, wherein the second bearing comprises a bearing selected from a group of bearings consisting of a needle bearing, a ball bearing, and a spherical roller bearing.

10. The bearing of claim 1, wherein the rotating ring is surrounded by the eccentric ring (12), the axis of the rotating ring (14) being laterally displaced with respect to the axis of the eccentric ring (12).

11. The bearing of claim 10, wherein the rotating ring (14) includes a central bore (15) into which the end of the rotatable element is insertable.

12. An assembly, comprising the bearing of claim 1 wherein the fixed ring (16) is connected to a stator (42) of a motor (40), and wherein the eccentric ring (12) is connected to a rotor (44) of the motor (40).

13. The assembly of claim 12, wherein a nip pressure of the rotatable element is calculable based on an electrical current of the motor (40) and on a measured orientation of the eccentric ring (12) relative to the fixed ring (16).

## Patentansprüche

1. Lager, Folgendes umfassend:
einen feststehenden Ring (16),
einen drehenden Ring (14), um ein Ende eines drehbaren Elements zu stützen, wobei eine Achse des drehenden Rings von einer Achse des feststehenden Rings seitlich versetzt ist,
einen exzentrischen Ring (12), der den drehenden Ring vom feststehenden Ring trennt, wobei der exzentrische Ring (12) im Verhältnis zum feststehenden Ring (16) drehbar und vom feststehenden Ring (16) durch ein Schrägkugellager (ACBB - Angular Contact Ball Bearing) (11) getrennt ist, wobei der exzentrische Ring (12) durch ein zweites Lager (13) vom drehenden Ring (14) getrennt ist und der exzentrische Ring (12) im Wesentlichen koaxial mit entweder dem feststehenden Ring (16) oder dem drehenden Ring (14) liegt,
wobei das ACBB (11) eine Gegenüberanordnung geneigter Oberflächen (28a, 28b) umfasst, um Kugeln (20) des ACBB zu begrenzen, und **dadurch gekennzeichnet, dass**
eine Toleranz des ACBB zum Neigen derart gestaltet ist, dass eine Ausrichtung der Achse des exzentrischen Rings (12) bezüglich der Achse des feststehenden Rings (16) neigbar ist.

2. Lager nach Anspruch 1, wobei der feststehende Ring (16) den exzentrischen Ring (12) umgibt und im Wesentlichen koaxial mit diesem liegt.

3. Lager nach Anspruch 1, wobei Kugeln des ACBB (11) in zwei im Wesentlichen koaxialen Kreisen mit im Wesentlichen gleichem Durchmesser angeordnet sind.

4. Lager nach Anspruch 1, wobei eine Neigung jeder geneigten Oberfläche (28a, 28b) derart ist, dass eine Kraft, die durch die Oberfläche auf jede Kugel des ACBB (11) ausgeübt wird, im Wesentlichen hin zu einer Achse des ACBB gerichtet ist.

5. Lager nach Anspruch 1, wobei ein radialer Spielraum des ACBB (11) null oder weniger beträgt.

6. Lager nach Anspruch 1, wobei das zweite Lager ein Zylinderrollenlager (13) ist.

7. Lager nach Anspruch 6, wobei Zylinder (18) des Zylinderrollenlagers (13) in zwei im Wesentlichen koaxialen Kreisen mit im Wesentlichen gleichem Durchmesser angeordnet sind.

8. Lager nach Anspruch 6, wobei ein radialer Spielraum des Zylinderrollenlagers (13) null oder weniger beträgt.

9. Lager nach Anspruch 1, wobei das zweite Lager ein Lager umfasst, das aus einer Gruppe von Lagern ausgewählt ist, die aus einem Nadellager, einem Kugellager und einem Tonnenlager besteht.

10. Lager nach Anspruch 1, wobei der drehende Ring vom exzentrischen Ring (12) umgeben ist und die Achse des drehenden Rings (14) bezüglich der Achse des exzentrischen Rings (12) seitlich versetzt ist.

11. Lager nach Anspruch 10, wobei der drehende Ring (14) eine Mittelbohrung (15) beinhaltet, in welche das Ende des drehbaren Elements eingesetzt werden kann.

12. Anordnung, die das Lager nach Anspruch 1 umfasst, wobei der feststehende Ring (16) mit einem Stator (42) eines Motors (40) verbunden ist und wobei der exzentrische Ring (12) mit einem Rotor (44) des Motors (40) verbunden ist.

13. Anordnung nach Anspruch 12, wobei ein Anpressdruck des drehbaren Elements auf der Grundlage einer elektrischen Stromstärke des Motors (40) und einer gemessenen Ausrichtung des exzentrischen Rings (12) im Verhältnis zum feststehenden Ring (16) berechenbar ist.

## Revendications

1. Roulement comprenant :
un anneau fixe (16) ;
un anneau rotatif (14) pour soutenir une extrémité d'un élément tournant, un axe de l'anneau rotatif étant décalé latéralement par rapport à un axe de l'anneau fixe ;
un anneau excentrique (12) qui sépare l'anneau tournant de l'anneau fixe, l'anneau excentrique (12) étant tournant par rapport à l'anneau fixe (16) et étant séparé de l'anneau fixe (16) par un roulement à bille à contact oblique (ACBB)(11), l'anneau excentrique (12) étant séparé de l'anneau rotatif (14) par un deuxième rouleau (13), l'anneau excentrique (12) étant essentiellement coaxial avec soit l'anneau fixe (16), soit l'anneau rotatif (14) ;
où l'ACBB (11) comprend une disposition face à face de surfaces inclinées (280, 286) pour confiner les billes (20) de l'ACBB ;
et **caractérisé en ce qu'**une tolérance de l'ACBB à l'inclinaison est configurée de façon qu'une orientation de l'axe de l'anneau excentrique (12) soit inclinable par rapport à l'axe de l'anneau fixe (16).

2. Roulement selon la revendication 1, dans lequel l'anneau fixe (16) entoure et est essentiellement coaxial avec l'anneau excentrique (12).

3. Roulement selon la revendication 1, dans lequel les billes de l'ACBB (11) sont disposées en deux cercles essentiellement coaxiaux de diamètres essentiellement égaux.

4. Roulement selon la revendication 1, dans lequel une pente de chaque surface inclinée (28a, 28b) est telle qu'une force qui est appliquée par la surface sur chaque bille de l'ACBB (11) est dirigée essentiellement en direction d'un axe de l'ACBB.

5. Roulement selon la revendication 1, dans lequel le jeu radial de l'ACBB (11) est de zéro ou moins.

6. Roulement selon la revendication 1, dans lequel le deuxième roulement comprend un roulement à rouleaux cylindriques (13).

7. Roulement selon la revendication 6, dans lequel les cylindres (18) du roulement à rouleaux cylindriques (13) sont disposés en deux cercles essentiellement coaxiaux de diamètres essentiellement égaux.

8. Roulement selon la revendication 6, dans lequel le jeu radial du roulement à rouleaux cylindriques (13) est de zéro ou moins.

9. Roulement selon la revendication 1, dans lequel le deuxième roulement comprend un roulement choisi dans un groupe de roulements constitué d'un roulement à aiguilles, un roulement à billes ou un roulement à rotule sur rouleaux.

10. Roulement selon la revendication 1, dans lequel l'anneau rotatif est entouré par l'anneau excentrique (12), l'axe de l'anneau rotatif (14) étant décalé latéralement par rapport à l'axe de l'anneau excentrique (12).

11. Roulement selon la revendication 10, dans lequel l'anneau rotatif (14) inclut un orifice central (15) dans lequel on peut insérer l'extrémité de l'élément tournant.

12. Montage comprenant le roulement selon la revendication 1, dans lequel l'anneau fixe (16) est connecté à un stator (42) d'un moteur (40), et dans lequel l'anneau excentrique (12) est connecté à un rotor (44) du moteur (40).

13. Montage selon la revendication 12, dans lequel on peut calculer une pression de contact de l'élément rotatif sur la base de l'intensité électrique du moteur (40) et d'une mesure de l'orientation de l'anneau excentrique (12) par rapport à l'anneau fixe (16).
